# EUROPÄISCHE PATENTANMELDUNG

(11) **EP 2 409 949 A1**
(43) Veröffentlichungstag der Anmeldung: **25.01.2012**
(21) Anmeldenummer: 11168165.6
(22) Anmeldetag: 31.05.2011
(51) Int. Cl.: B67C 3/20, G01G 17/04

(54) **Füllvorrichtung zum Befüllen von Behältern**

(30) Priorität: 19.07.2010 DE 102010031524
(71) Anmelder: Krones AG, 93073 Neutraubling (DE)
(72) Erfinder: Häuslmann, Mathias, 92224 Amberg (DE)
(74) Vertreter: Grünecker, Kinkeldey, Stockmair & Schwanhäusser

(57) **Zusammenfassung**

Die Erfindung umfasst eine Füllvorrichtung zum Befüllen von Behältern (101;201;301;501;601;701) in der Lebensmittelindustrie, umfassend wenigstens eine Wiegeeinrichtung zum Bestimmen einer Füllmenge, wobei die wenigstens eine Wiegeeinrichtung wenigstens ein Piezoelement (203;303;403;503;603;703) umfasst.

## Beschreibung

Die vorliegende Erfindung betrifft eine Füllvorrichtung zum Befüllen von Behältern in der Lebensmittelindustrie umfassend wenigstens eine Wiegeeinrichtung zum Bestimmen einer Füllmenge.

In der Lebensmittelindustrie werden Abfüllvorgänge häufig basierend auf der Füllmenge eines Behälters während der Abfüllung gesteuert. Beispielsweise kann die Befüllung eines Behälters bei Erreichen einer vorherbestimmten Füllmenge beendet werden. Eine Möglichkeit der Füllmengenbestimmung bei der Abfüllung ist die Verwendung einer Wiegeeinrichtung, welche die Masse des zu füllenden Behälters mittels Dehnungsmessstreifen bestimmt und daraus die Füllmenge berechnet.

Dafür werden die Dehnungsmessstreifen, welche bei Verformungen ihren elektrischen Widerstand ändern, mit einem Spezialkleber auf ein Bauteil aufgeklebt, das sich unter Belastung während des Füllvorgangs minimal verformt. Diese Verformung (Dehnung) führt dann zu einer Veränderung des Widerstands des Dehnungsmessstreifens woraus wiederum die Masse bzw. das Gewicht des zu füllenden Behälters berechnet werden kann.

Derartige Füllvorrichtungen sind beispielsweise aus der EP 1 025 424 oder der DE 10 2008 030 721 bekannt.

Ein Nachteil der genannten Füllvorrichtungen ist es jedoch, dass die Lebensdauer der Dehnungsmessstreifen auf eine vorherbestimmte Anzahl von Messzyklen beschränkt ist, üblicherweise auf etwa 10 Millionen Messzyklen. Werden die Dehnungsmessstreifen über diesen Wert hinaus verwendet, kann es zu Materialermüdungen und damit verfälschten Messergebnissen kommen, was wiederum zu ungenauen Füllmengen führen kann.

Daher ist es Aufgabe der vorliegenden Erfindung, eine zuverlässigere Füllvorrichtung zum Befüllen von Behältern in der Lebensmittelindustrie bereitzustellen. Diese Aufgabe wird durch eine Füllvorrichtung gemäß Anspruch 1 gelöst.

Die erfindungsgemäße Füllvorrichtung zum Befüllen von Behältern in der Lebensmittelindustrie umfasst wenigstens eine Wiegeeinrichtung zum Bestimmen einer Füllmenge, wobei die wenigstens eine Wiegeeinrichtung wenigstens ein Piezoelement umfasst.

Da Piezoelemente im Wesentlichen ermüdungsfrei betrieben werden können, kann durch die Verwendung des wenigstens einen Piezoelements die Zuverlässigkeit der wenigstens einen Wiegeeinrichtung und damit der Füllvorrichtung erhöht werden.

Bei der Füllvorrichtung kann es sich also um einen Wiegefüller, einen Wiegezellenfüller, oder einen Gewichtsfüller, insbesondere zum Befüllen von Behältern in der Lebensmittelindustrie mit flüssigen oder zähflüssigen Medien, beispielsweise Getränken, handeln.

Die Füllvorrichtung kann insbesondere eine Füllvorrichtung zum Befüllen von Behältern in der Getränkeindustrie sein.

Die Füllvorrichtung kann derart ausgebildet und/oder konfiguriert sein, dass die wenigstens eine Wiegeeinrichtung während eines Befüllvorgangs eine Füllmenge bestimmt, und den Füllvorgang basierend auf der bestimmten Füllmenge steuert. Beispielsweise kann die Füllvorrichtung derart ausgebildet und/oder konfiguriert sein, dass ein Befüllvorgang beim Erreichen einer vorherbestimmten Füllmenge gestoppt wird.

Bei den Behältern kann es sich beispielsweise um Flaschen, insbesondere um Kunststoffflaschen und/oder Glasflaschen handeln. Kunststoffflaschen können insbesondere Polyethylenterephthalat (PET) umfassen oder aus PET bestehen.

Die Füllvorrichtung kann je nach Ausführung einerseits für aseptisch abzufüllende Produkte wie beispielsweise Milch oder Säfte eingesetzt werden, andererseits auch für nicht-aseptisch abzufüllende Produkte wie beispielsweise Speiseöl oder auch für sogenannte ESL (Extended Shelf Life)-Produkte, d.h. Abfüllprodukte, die in Kühlkette vertrieben werden wie beispielsweise Milchmischgetränke, Trinkjoghurt oder Ähnliches.

Das wenigstens eine Piezoelement kann insbesondere derart ausgebildet und/oder angeordnet sein, dass mit Hilfe des wenigstens einen Piezoelements die Masse, insbesondere die Massenzunahme, eines zu befüllenden Behälters bestimmt werden kann.

Bei dem wenigstens einen Piezoelement kann es sich insbesondere um einen piezoelektrischen Sensor handeln. Das wenigstens eine Piezoelement kann insbesondere wenigstens einen Piezokristall umfassen oder aus wenigstens einem Piezokristall bestehen.

Das wenigstens eine Piezoelement kann derart angeordnet sein, dass eine zunehmende Masse eines Behälters während eines Füllvorgangs einen Piezokristall des wenigstens einen Piezoelements verformt. Durch die Verformung oder Deformation des Piezokristalls werden im Kristall elektrische Ladungen frei, welche direkt proportional zur relativen Deformation des Kristalls sind. Diese erzeugten elektrischen Ladungen können durch einen Ladungsverstärker in elektrische Spannung umgewandelt werden und die abgegriffene elektrische Spannung kann dann, beispielsweise durch ein Steuerungselement, ausgewertet werden. Dadurch kann eine Füllmenge bestimmt werden. Dabei kann die Bestimmung bevorzugt kontinuierlich erfolgen oder auch schrittweise.

Mit anderen Worten kann die wenigstens eine Wiegeeinrichtung wenigstens einen Ladungsverstärker zum Umwandeln der im wenigstens einen Piezoelement erzeugten Ladungen in eine elektrische Spannung umfassen. Die wenigstens eine Wiegeeinrichtung kann außerdem ein Steuerungselement umfassen, insbesondere zum Bestimmen der Füllmenge basierend auf der vom Ladungsverstärker erzeugten elektrischen Spannung.

Das wenigstens eine Piezoelement kann Siliziumdioxid (SiO₂) umfassen. Insbesondere kann ein Piezokristall des wenigstens einen Piezoelements Siliziumdioxid umfassen oder aus Siliziumdioxid bestehen. Es können jedoch auch beliebige andere piezoelektrische Materialien, beispielsweise Blei-Zirkonat-Titanat (PZT), verwendet werden.

Die Füllvorrichtung kann außerdem wenigstens ein Füllelement umfassen. Das wenigstens eine Füllelement kann ein Füllrohr und ein Füllventil umfassen, wobei das Füllrohr insbesondere jedoch nicht zwingend wenigstens teilweise im Inneren eines zu befüllenden Behälters angeordnet werden kann und das Einbringen des abzufüllenden flüssigen oder zähflüssigen Mediums in den Behälter durch das Füllventil bzw. durch dessen Steuereinrichtung gesteuert werden kann.

Die Füllvorrichtung kann insbesondere mehrere Füllelemente umfassen, wobei jedes der Füllelemente eine Wiegeeinrichtung umfasst, die wenigstens ein Piezoelement aufweist.

Die Wiegeeinrichtung eines jeden Füllelements kann einen eigenen Ladungsverstärker und/oder ein eigenes Steuerungselement aufweisen. Alternativ können ein Ladungsverstärker und/oder ein Steuerungselement für das wenigstens eine Piezoelement mehrerer Füllelemente vorgesehen sein. Mit anderen Worten kann das Steuerungselement ein zentrales Steuerungselement sein.

Die Füllvorrichtung kann außerdem wenigstens eine Transportvorrichtung umfassen, wobei die Transportvorrichtung derart ausgebildet ist, dass sie einen leeren Behälter zu einem Füllelement der Füllvorrichtung fördert und den befüllten Behälter nach dem Füllvorgang aus der Füllvorrichtung ausschleust.

Die Füllvorrichtung kann derart ausgebildet sein, dass ein zu befüllender Behälter mechanisch mit dem wenigstens einen Piezoelement verbunden ist. Dadurch kann die zunehmende Masse eines Behälters während eines Füllvorgangs zu einer Deformation des wenigstens einen Piezoelements führen. Diese Deformation kann, wie oben dargelegt, wiederum verwendet werden, um die Füllmenge zu bestimmen.

Das wenigstens eine Piezoelement kann insbesondere derart angeordnet sein, dass es beim Füllvorgang komprimiert und/oder expandiert wird.

Die Füllvorrichtung kann derart ausgebildet sein, dass ein zu befüllender Behälter über wenigstens einen Hebel mit dem wenigstens einen Piezoelement verbunden ist. Dadurch kann das Piezoelement vorteilhaft, insbesondere für Anwendungen mit hohem Hygieneanspruch wie ESL-Abfüllung oder aseptische Abfüllung, aus dem Spritzbereich des Füllelementes gehalten werden, wodurch Verunreinigungen durch Produktspritzer durch den Füllvorgang mit dadurch notwendig werdenden Sanitationsmaßnahmen minimiert oder vermieden werden können.

Die Füllvorrichtung kann derart ausgebildet sein, dass ein zu befüllender Behälter mittelbar oder unmittelbar mit dem wenigstens einen Piezoelement verbunden ist.

Die Füllvorrichtung kann insbesondere derart ausgebildet sein, dass zwischen einem zu befüllenden Behälter und dem wenigstens einen Piezoelement ein Abdeckelement angeordnet ist. Dadurch, dass der zu befüllende Behälter das wenigstens eine Piezoelement dann nur mittelbar kontaktiert, kann das wenigstens eine Piezoelement vor Beschädigungen geschützt werden. Alternativ kann das wenigstens eine Piezoelement durch das Abdeckelement befestigt oder fixiert werden. Weiterhin kann das wenigstens eine Piezoelement an dem Abdeckelement befestigt oder fixiert sein und das Abdeckelement austauschbar sein. Dadurch können die Piezoelemente einer Wiegeinrichtung gemeinsam für Wartungs-/Instandhaltungszwecke entnommen, ausgetauscht und/oder wieder eingebaut werden.

Das Abdeckelement kann beispielsweise einen Kunststoff umfassen oder aus einem Kunststoff bestehen. Als vorteilhaft haben sich hier PEEK (Polyetheretherketon) oder PTFE (Polytetrafluorethylen) erwiesen, da diese Kunststoffe eine hohe Chemikalienbeständigkeit haben, wodurch das Abdeckelement unempfindlich gegen die in Abfüllanlagen eingesetzten Reinigungs- und Desinfektionsmittel ist. Aus dem gleichen Grund kann für das Abdeckelement auch Edelstahl verwendet werden.

Die Füllvorrichtung kann außerdem eine Halterung zum Haltern eines zu befüllenden Behälters umfassen, wobei das wenigstens eine Piezoelement im Bereich der Halterung angeordnet ist.

Die Halterung kann insbesondere eine Klammer mit wenigstens einem Klammerarm sein, wobei das wenigstens eine Piezoelement in und/oder auf dem Klammerarm angeordnet ist. Auf dem Klammerarm kann hierbei insbesondere bedeuten, dass das wenigstens eine Piezoelement in einem vorherbestimmten Oberflächenbereich des Klammerarms angeordnet ist.

Bei der Halterung kann es sich beispielsweise um eine Neckhandlingklammer zum Haltern einer Flasche im Bereich deren Mündung handeln. Dabei kann die Neckhandlingklammer wenigstens einen Klammerarm umfassen, wobei das wenigstens eine Piezoelement in und/oder auf dem Klammerarm angeordnet ist.

Der zu befüllende Behälter kann insbesondere einen Tragring umfassen, welcher auf einem vorherbestimmten Oberflächenbereich der Halterung, insbesondere der Neckhandlingklammer, aufliegt. Das wenigstens eine Piezoelement kann in diesem Fall im vorherbestimmten Oberflächenbereich der Halterung, insbesondere der Neckhandlingklammer, angeordnet sein.

Bei der Halterung kann es sich beispielsweise um ein Basehandlingelement handeln. Unter einem Basehandlingelement kann eine Halterung oder ein Aufnahmeelement verstanden werden, auf dem eine Grundfläche eines zu befüllenden Behälters während des Abfüllvorgangs aufliegt. Das wenigstens eine Piezoelement kann in und/oder auf dem Aufnahmeelement, insbesondere Basehandlingelement, angeordnet sein.

Die wenigstens eine Wiegeeinrichtung kann außerdem wenigstens ein Federelement umfassen. Durch das wenigstens eine Federelement kann ein Tara, also ein Leergewicht, des zu befüllenden Behälters ausgeglichen oder berücksichtigt werden. Unter Federelement wird jegliches elastisch verformbare bzw. unter Druck definiert verformbare Element verstanden, das bei jeder Beaufschlagung mit einem bestimmten Druck in eine vorbestimmte verformte Stellung übergeht und nach Ende der Druckbelastung wieder in die gleiche nicht verformte Grundstellung übergeht, wie beispielsweise Spiralfedern oder andere Federtypen, Formkörper aus Elastomer, sowie auch Iuftdruckgestützte Kolben-Zylinder-Elemente.

Das wenigstens eine Federelement kann insbesondere derart angeordnet und/oder ausgebildet sein, dass ein zu befüllender Behälter mittelbar oder unmittelbar mechanisch mit dem wenigstens einen Federelement verbunden ist.

Insbesondere kann das wenigstens eine Federelement derart angeordnet und/oder ausgebildet sein, dass ein zu befüllender Behälter das wenigstens eine Federelement derart verformt, dass der zu befüllende Behälter in mechanischen Kontakt mit dem wenigstens einen Piezoelement kommt. Durch passend gewählte Federelemente kann damit die Masse des leeren Behälters aufgenommen werden, wodurch das wenigstens eine Piezoelement nur in Folge der Zunahme der Behältermasse durch die Befüllung deformiert wird und somit das Füllgewicht direkt bestimmbar ist.

Bevorzugt können die Federelemente austauschbar und/oder einstellbar sein, insbesondere automatisch einstellbar ausgebildet sein. Dadurch kann auf unterschiedliche Behälterleergewichte beispielsweise bei unterschiedlichen Abfüllchargen reagiert werden. Bevorzugt können alle austauschbaren Federelemente einer Wiegevorrichtung gemeinsam ausgetauscht werden. Bevorzugt können automatisch einstellbare Federelemente für alle Wiegevorrichtungen einer Fülleinrichtung gemeinsam und zeitgleich automatisch einstellbar sein.

Die Füllvorrichtung kann außerdem eine Spannungsquelle umfassen, die derart ausgebildet und/oder angeordnet ist, dass eine vorherbestimmte Spannung an das wenigstens eine Piezoelement angelegt werden kann. Dadurch kann einen Verformung des wenigstens einen Piezoelements hervorgerufen werden, wodurch beispielsweise eine Halterung in eine Ausgangsstellung gebracht werden kann.

Die Erfindung stellt außerdem eine Verwendung wenigstens eines Piezoelements zur Bestimmung einer Füllmenge in einer Füllvorrichtung zum Befüllen von Behältern in der Lebensmittelindustrie bereit.

Das wenigstens eine Piezoelement, die Füllvorrichtung und/oder die Behälter können wenigstens eines der oben genannten Merkmale aufweisen.

Die Erfindung stellt außerdem ein Verfahren zum Befüllen von Behältern in der Lebensmittelindustrie, insbesondere mit Flüssigkeiten, bereit, umfassend die Schritte:
Bereitstellen einer oben genannten Füllvorrichtung;
Bestimmen einer elektrischen Ladung wenigstens eines Piezoelements; und
Bestimmen einer Füllmenge basierend auf der bestimmten elektrischen Ladung.
Das wenigstens eine Piezoelement, die Füllvorrichtung und/oder die Behälter können wenigstens eines der oben genannten Merkmale aufweisen.

Weitere Merkmale und Vorteile der Erfindung werden nachfolgend anhand der beispielhaften

Figuren erläutert. Dabei zeigt
- Figur 1: eine Draufsicht auf einen Teil einer beispielhaften Füllvorrichtung;
- Figur 2: eine Seitenansicht eines Teils einer beispielhaften Füllvorrichtung;
- Figur 3: eine Seitenansicht eines Teils einer weiteren beispielhaften Füllvorrichtung;
- Figur 4: eine Seitenansicht eines Teils einer weiteren beispielhaften Füllvorrichtung;
- Figur 5: eine Seitenansicht eines Teils einer weiteren beispielhaften Füllvorrichtung;
- Figur 6: eine Seitenansicht eines Teils einer weiteren beispielhaften Füllvorrichtung; und
- Figur 7: eine Seitenansicht eines Teils einer weiteren beispielhaften Füllvorrichtung.

In den beispielhaften Figuren werden Flaschen als zu befüllende Behälter gezeigt. Es können jedoch auch beliebige andere Behälter, die in der Lebensmittelindustrie Verwendung finden, beispielsweise Dosen oder Verbundkartonverpackungen, mit den beispielhaften Füllvorrichtungen befüllt werden.

In den Figuren sind zur Illustration jeweils nur Teile der beispielhaften Füllvorrichtungen gezeigt. Die beispielhaften Füllvorrichtungen können insbesondere mehrere solche Teile und auch weitere nicht gezeigte Elemente umfassen.

Die beispielhaften Füllvorrichtungen können als Rundläufer oder Linearläufer ausgebildet sein und mehrere Füllelemente umfassen. Bei Rundläufern können die Füllelemente bevorzugt gleichmäßig am Umfang eines Rotors verteilt sein. Sie können bevorzugt kontinuierlich arbeiten. Linearläufer können bevorzugt taktweise betrieben werden. Es können flüssige oder zähflüssige Medien, beispielsweise Getränke, abgefüllt werden. Die Temperatur der abzufüllenden Medien kann zwischen Heiß, beim Heißabfüllen, und kalt, beim Kaltabfüllen, variieren.

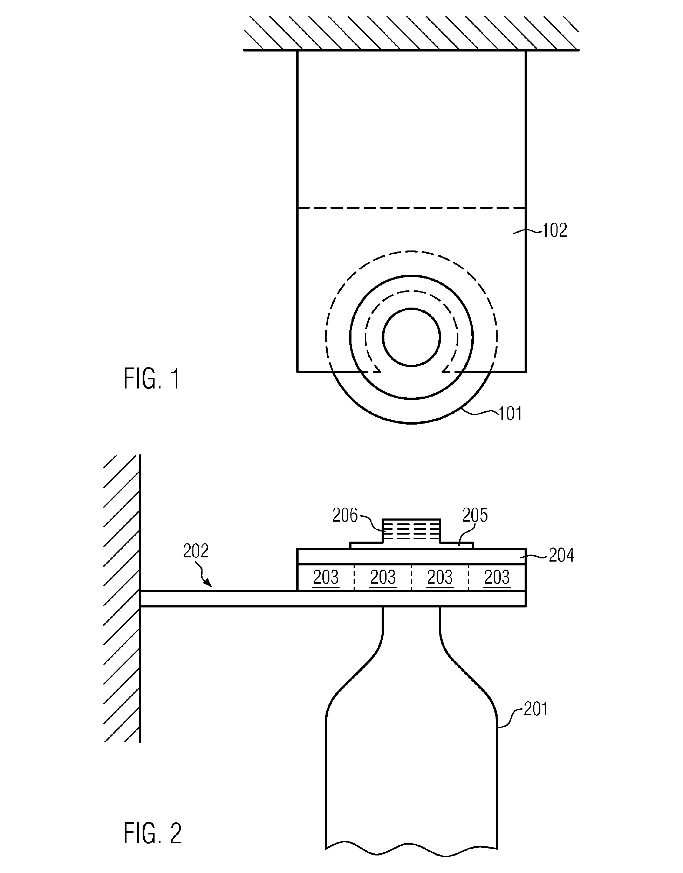

Figuren 1 und 2 zeigen eine beispielhafte Füllvorrichtung zum Befüllen von Flaschen, die durch eine Halterung im sogenannten Neckhandling im Bereich ihrer Mündung gehaltert werden.

Figur 1 zeigt dabei eine beispielhafte Flasche 101, welche von einer Neckhandlingklammer 102 gehaltert wird. Dafür weist die Flasche 101 einen Tragring auf, der in einem vorherbestimmten Oberflächenbereich der Neckhandlingklammer 102 aufliegt. Alternativ könnte die Neckhandlingklammer 102 auch wenigstens einen Klammerarm, bevorzugt wenigstens zwei Klammerarme aufweisen, welcher die Flasche im Bereich ihrer Mündung aktiv oder passiv klemmt.

Figur 2 zeigt eine Seitenansicht der in Figur 1 dargestellten Anordnung.

Die Flasche 201 umfasst einen Tragring 205 und ein Gewinde 206 im Bereich der Flaschenmündung zum Verschließen der Flasche 201 mit einem Schraubverschluss.

Im Bereich der Neckhandlingklammer 202, insbesondere auf der Oberseite der Neckhandlingklammer 202 sind mehrere Piezoelemente 203 angeordnet. Obwohl hier vier Piezoelemente 203 gezeigt sind, können auch mehrere oder weniger Piezoelemente 203 oder auch nur ein einziges Piezoelement 203 verwendet werden.

Die Piezoelemente 203 stehen mit der durch die Neckhandlingklammer 202 gehaltenen Flasche 201 in mechanischem Kontakt. Insbesondere ist die zu befüllende Flasche 201 mittelbar über ein Abdeckelement 204 mit den Piezoelementen 203 verbunden. Durch das Abdeckelement 204 können die Piezoelemente 203 vor Beschädigungen geschützt werden und/oder wenigstens teilweise auf der Oberfläche der Neckhandlingklammer 202 fixiert werden. Alternativ kann die zu befüllende Flasche mittelbar über eine Neckhandlingklammer mit wenigstens einem Klammerarm, bevorzugt mit wenigstens zwei Klammerarmen, über ein Abdeckelement mit dem oder den Piezoelement(en) verbunden sein.

Wenn die Flasche 201 mit einem flüssigen oder zähflüssigen Medium befüllt wird, erhöht sich die Masse bzw. das Gewicht der Flasche 201 entsprechend der Füllmenge. Dadurch werden die Piezoelemente 203 komprimiert. Durch diese Deformation entsteht im Piezoelement eine elektrische Ladung, welche durch einen hier nicht gezeigten Ladungsverstärker in eine elektrische Spannung umgewandelt werden kann. Ein in Figur 2 ebenfalls nicht gezeigtes zentrales Steuerungselement kann diese Spannung im Nachfolgenden auswerten und daraus die Masse beziehungsweise Füllmenge des im Behälter befindlichen Produkts unter Berücksichtigung der Masse des leeren Behälters errechnen. Sobald die vom Anlagenbetreiber gewünschte Füllmenge erreicht wird, kann ein entsprechendes Flüssigkeitsventil der Füllvorrichtung geschlossen und der Abfüllvorgang für den Behälter beendet werden. Die durch die Kristallverformung erzeugte Spannung kann dabei kontinuierlich abgegriffen, verstärkt und ausgewertet werden. Alternativ kann eine Auswertung in sehr kurzen Zeitintervallen erfolgen, und dadurch die Massenzunahme in der Flasche durch mehrere Messungen bestimmt werden.

Zum Befüllen der Flasche kann die Füllvorrichtung insbesondere ein Fülleelement zur Freistrahlfüllung aufweisen. Dabei wird die Flasche üblicherweise direkt unter dem Füllelement platziert, wobei kein Bauteil des Füllelementes innerhalb der Flasche angeordnet ist. Alternativ ist möglich, ein Füllrohr durch Relativbewegung von Flasche und Füllelement innerhalb der Flasche anzuordnen. Aufgrund der Eigenschaften des Piezoelements spielt es keine Rolle, ob sich die Flasche und/oder das Füllrohr während des Abfüllvorgangs bewegen.

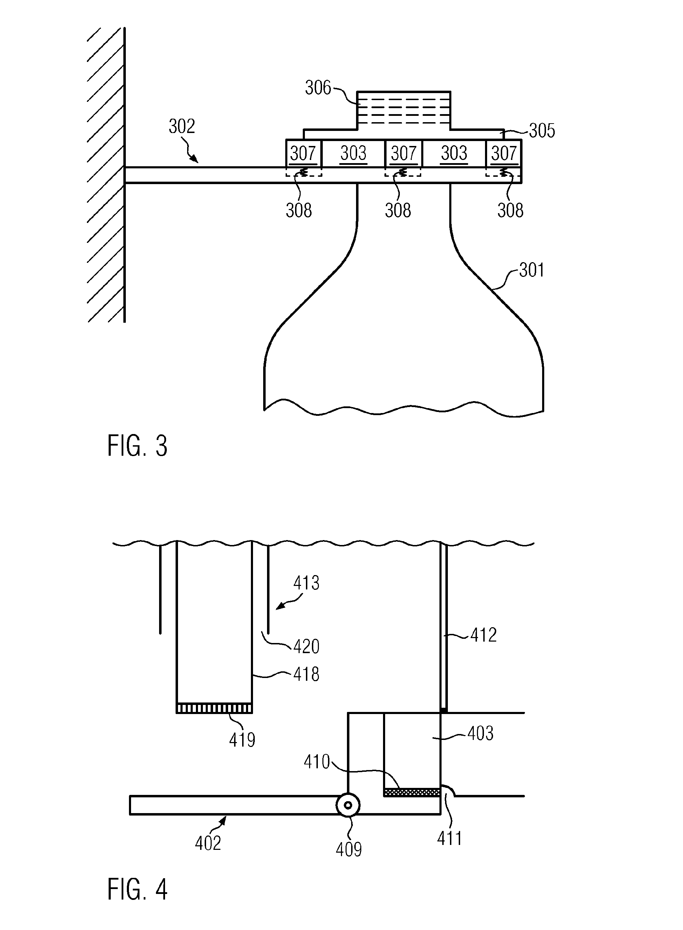

Figur 3 zeigt einen Teil einer weiteren beispielhaften Füllvorrichtung. Wiederum wird eine Flasche 301 durch eine Neckholdingklammer 302 im Bereich der Flaschenmündung gehaltert. Die Flasche weist wiederum einen Tragring 305 und ein Gewinde 306 im Bereich der Mündung auf.

Die Füllvorrichtung, insbesondere die wenigstens eine Wiegeeinrichtung der Füllvorrichtung, umfasst in diesem Beispiel zwei Piezoelemente 303. Im Bereich der Piezoelemente 303 sind außerdem beweglich gelagerte Zylinder 307 angeordnet. Diese Zylinder 307 sind durch Federelemente 308, im Ausführungsbeispiel Spiralfedern, federnd gelagert. Durch die Federelemente 308 können die Zylinder 307 in einer Richtung parallel zur Längsachse der zu befüllenden Flasche 301 vorgespannt werden, insbesondere derart, dass ein leerer, zu befüllender Behälter die Federelemente 308 derart verformt, insbesondere staucht, dass der zu befüllende Behälter in mechanischen Kontakt mit den Piezoelementen 303 kommt. Mit anderen Worten werden die Federelemente 308 nach Auflage der leeren Flasche soweit zusammengedrückt, dass die Zylinder 307 auf gleicher Ebene zu den Piezoelementen 303 liegen. Die Leermasse der Flasche 301 kann somit wegtariert werden. Dadurch ist die Flasche 301 während des Wiegevorganges unmittelbar mit den Piezoelemeneten 303 verbunden.

Die zur weiteren Kontraktion nötige Masse kann über das Hook'sche Gesetz berechnet werden und zu der an den Piezoelementen 303 anliegenden Masse hinzu addiert werden.

Der Durchmesser des Tragrings 305 der Flasche 301 kann derart gewählt sein, dass der Tragring 305 mit wenigstens zwei Zylindern 307 in Berührung kommt.

Figur 4 zeigt eine weitere beispielhafte Füllvorrichtung. In Figur 4 ist der Übersicht wegen der zu befüllende Behälter nicht gezeigt. Wiederum gezeigt ist in Figur 4 eine Neckholdingklammer 402. Die Neckholdingklammer 402 ist an einem Gelenk 409 beweglich gelagert. In Figur 4 ist außerdem ein Teil eines Füllelements 413, insbesondere einen Füllkanal 418 mit einer endständigen Gassperre 419 sowie einem CIP (Cleaning In Place)-Kanal 420, gezeigt. Die nicht dargestellte Flasche befindet sich während des Abfüllvorgangs direkt unterhalb des Füllkanals 418. Die Gassperre 419 verhindert ein Ausfließen der abzufüllenden Flüssigkeit aus dem Füllkanal 418 bei geschlossenem, distal von der Gassperre 419 im Füllkanal 418 angeordneten Absperrventil (nicht gezeigt). Der CIP-Kanal 420 und der Füllkanal 418 können in bekannter Weise durch manuelles oder automatisches Einsetzen einer nicht gezeigten CIP-Kappe miteinander in Fluidverbindung kurzgeschlossen werden, wodurch ein Reinigungskreislauf für eine regelmäßige Innenreinigung der Füllvorrichtung ermöglicht wird.

Beim Abfüllvorgang wird der zu befüllende Behälter durch die zunehmende Füllmenge schwerer, wodurch sich das Ende der durch das Gelenk 409 beweglich gelagerten Neckholdingklammer 402 an dem der Behälter angeordnet ist vertikal nach unten bewegt. Dadurch bewegt sich ein am gegenüberliegenden Ende der Neckholdingklammer 402 angeordneter Sockel 410 nach oben und komprimiert dadurch das Piezoelement 403, das in einer ortsfesten Haltevorrichtung eingespannt ist.

Der zu befüllende Behälter ist in diesem Beispiel also über einen durch die Neckholdingklammer 402 gebildeten Hebel mit dem Piezoelement 403 verbunden.

Um eine Bewegung der Neckholdingklammer 402 ohne ein Berühren der für das Piezoelement 403 vorgesehenen Haltevorrichtung zu gewährleisten, kann eine Auskerbung 411 vorgesehen sein. Die Haltevorrichtung zur Befestigung des Piezoelements 403 kann durch ein Verbindungselement 412 mit weiteren Teilen der Füllvorrichtung verbunden sein. Bei Rundläufern kann das Verbindungselement 412 insbesondere eine Innenwand der Füllvorrichtung sein, die das Piezoelement 403 aus dem Spritzbereich des Füllelementes hält und vor Flüssigkeitsspritzern schützt. Insbesondere bei Füllvorrichtungen zur kalt-aseptischen Abfüllung, bei denen es in höchstem Maße auf Hygiene ankommt, ist es wichtig, dass möglichst wenige Komponenten innerhalb eines Reinraumes oder Isolator-Steriltunnels eingebaut sind, in welchem die kaltaseptische Abfüllung durchgeführt wird. In diesem Fall kann das Verbindungselement 412 die Isolatorwand sein, die den Sterilbereich mit dem Füllelement von der unsterilen Umgebung - der Abfüllhalle - trennt.

Eine gewünschte Tara der abzufüllenden Flasche kann durch ein kurzes Anlegen einer elektrischen Spannung an das Piezoelement 403 erreicht werden. Dafür kann die Füllvorrichtung eine hier nicht dargestellte Spannungsquelle umfassen, die mit dem Piezoelement 403 verbunden ist.

Durch das Anlegen der Spannung kann das Piezoelement 403 expandiert werden und damit die bereits durch die leere Flasche verursachte Kontraktion ausgeglichen werden.

Alternativ oder zusätzlich könnte ein bereits bekannter Wert der Masse der Flasche im leeren Zustand ermittelt werden und in einem Steuerungselement gespeichert werden, in dem er dann später von dem durch das Piezoelement 403 gemessenen Wert subtrahiert wird. Dadurch kann das Nettofüllgewicht der Flasche bestimmt werden.

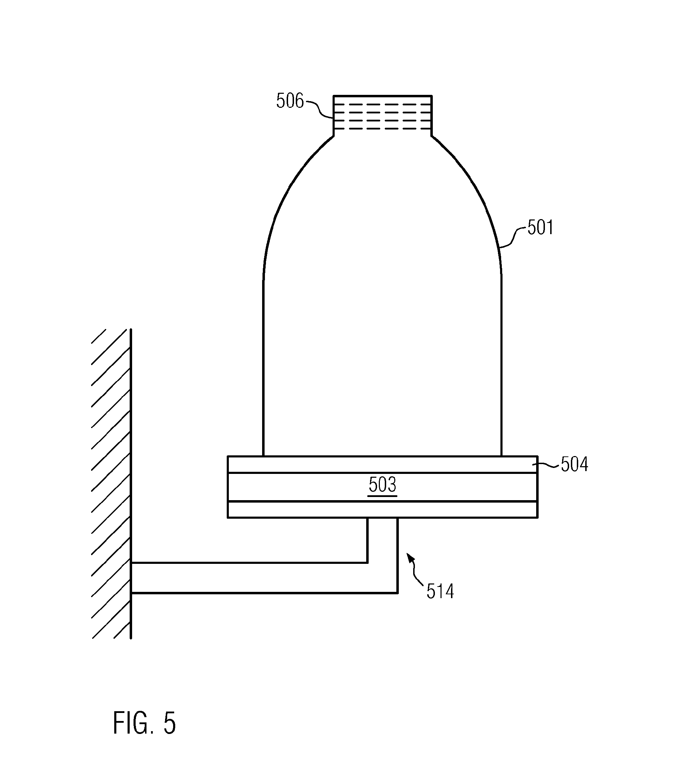

Figur 5 zeigt einen Teil einer weiteren beispielhaften Füllvorrichtung, insbesondere zum Befüllen von Glasflaschen. In diesem Fall umfasst die beispielhafte Füllvorrichtung eine Halterung in Form eines Aufnahmeelements 514. Das Aufnahmeelement 514 ist hier als Basehandlingelement ausgebildet. Mit anderen Worten wird die abzufüllende Flasche 501 während des Füllvorgangs auf dem Aufnahmeelement 514 angeordnet. Dabei kann alternativ das Aufnahmeelement 514 durch eine nicht gezeigte Antriebseinrichtung höhenverfahrbar sein. Dies ist insbesondere vorteilhaft bei Verwendung eines Füllelementes, das ein Füllrohr aufweist. Auf diese Weise können beispielsweise stark schäumende Produkte unterschichtig eingefüllt werden.

Das Aufnahmeelement 514 umfasst außerdem ein Piezoelement 503. Zwischen der abzufüllenden Flasche 501 und dem Piezoelement 503 ist ein Abdeckelement 504 zum Schutz des Piezoelements 503 angeordnet. Alternativ können mehrere Piezoelemente an dem Aufnahmeelement 514 angeordnet sein.

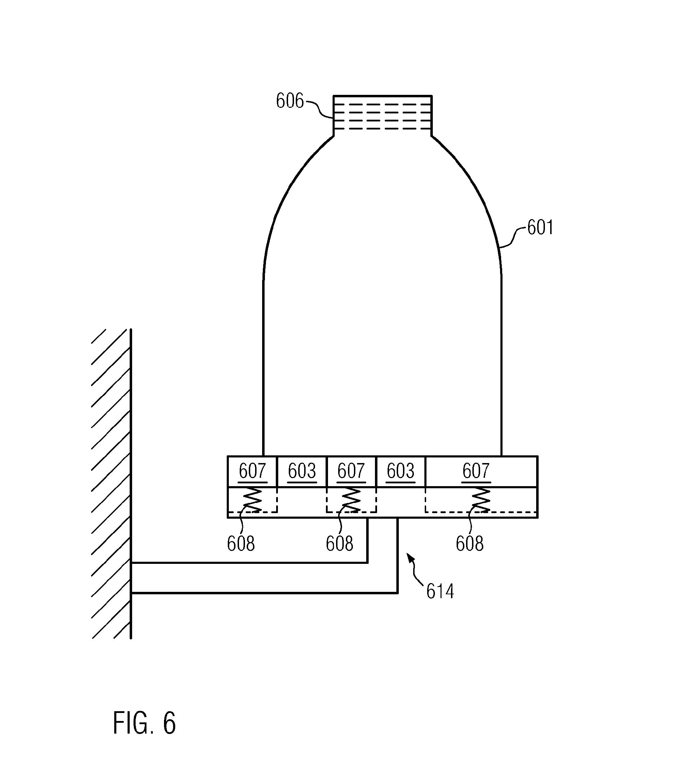

Figur 6 zeigt einen Teil einer weiteren beispielhaften Füllvorrichtung. Insbesondere zeigt Figur 6 eine Halterung in Form eines Aufnahmeelements 614. Wie in Figur 5 ist das Aufnahmeelement 614 ein Basehandlingelement, worauf eine abzufüllende Flasche 601 während des Füllvorgangs angeordnet wird. Die beispielhafte Flasche 601 kann beispielsweise ein Gewinde 606 zum Verschließen der Flasche 601 mit einem Schraubverschluss umfassen.

Das Aufnahmeelement 614 umfasst zwei Piezoelemente 603 sowie drei Zylinder 607, welche jeweils durch Federelemente 608, im Ausführungsbeispiel Spiralfedern, federnd gelagert sind. Dadurch kann, wie in Zusammenhang mit Figur 3 erläutert, das Leergewicht der zu befüllenden Flasche 601 berücksichtigt werden. Alternativ zu den beschriebenen Basehandlingausführungen (Fig. 5, Fig. 6) ist weiterhin, sogar vorteilhaft für Abfüllung mit hohen hygienischen Anforderungen, möglich, dass zwischen der Einbauposition des/der Piezoelemente/s und dem Behälterboden eine mechanische Abtrennung zwischen einem beispielsweise Sterilbereich oberhalb der mechanischen Abtrennung und einem unsterilen Bereich unterhalb der Abtrennung vorhanden sein kann, wobei die Einbauposition des Piezoelementes sich im unsterilen Bereich befindet. Eine bevorzugt reibungsfrei gleitende Durchführung des Aufnahmeelementes durch die mechanische Abtrennung kann dann bevorzugt abgedichtet sein, beispielsweise durch einen Faltenbalg, so dass kein Medienaustausch zwischen den beiden getrennten Bereichen möglich ist.

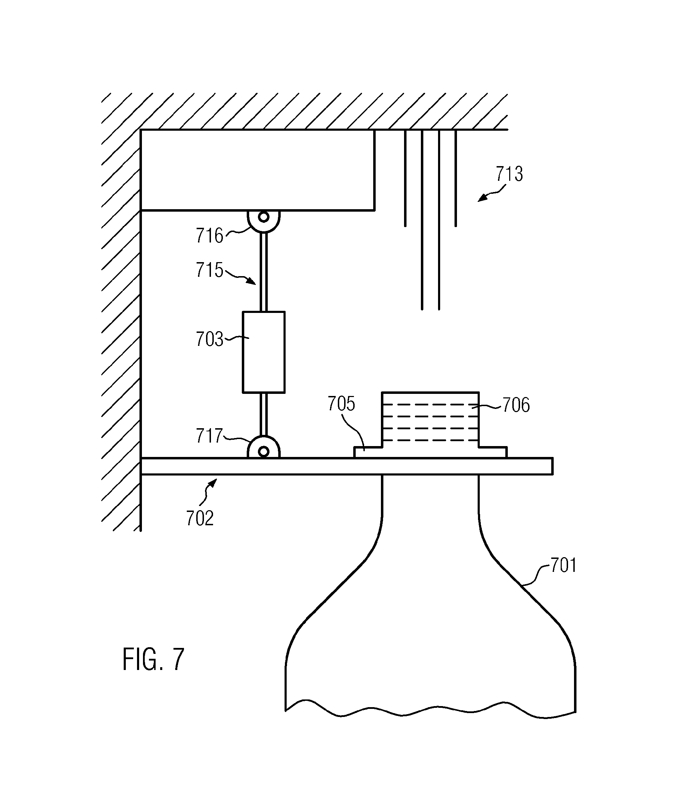

Figur 7 zeigt einen Teil einer weiteren beispielhaften Füllvorrichtung. Insbesondere zeigt Figur 7 eine beispielhafte Flasche 701, insbesondere eine PET-Flasche, umfassend einen Tragring 705 und ein Gewinde 706. Mit dem Tragring 705 liegt die zu befüllende Flasche auf einem vorherbestimmten Oberflächenbereich einer Neckhandlingklammer 702 auf. Über ein Füllelement 713 der Befüllvorrichtung kann die Flasche 701 befüllt werden.

Die Neckholdingklammer 702 ist in diesem Beispiel mit einem Zugelement 715 verbunden. Insbesondere ist das Zugelement 715 an einer ersten Befestigungsstelle 716 mit einem darüberliegenden Teil der Füllvorrichtung und an einer zweiten Befestigungsstelle 717 mit der Neckholdingklammer 702 verbunden. Das Zugelement 715 ist außerdem mit einem Piezoelement 703 verbunden.

Beim Abfüllvorgang bewegt sich die Neckholdingklammer 702 in vertikaler Richtung nach unten. Dadurch wird das Piezoelement 703 gedehnt. Die dabei entstehende elektrische Ladung kann wiederum über ein Steuerungselement ausgewertet werden.

Die oben beschriebene Verwendung eines Piezoelements bietet gegenüber den im Stand der Technik bekannten Dehnungsmessstreifen zusätzlich einige weitere Vorteile.

Beispielsweise können Piezoelemente wesentlich kleiner als eine Messeinrichtung mit Dehnungsmessstreifen ausgebildet werden. In Abfüllanlagen ist das Einsparen von Platz ein wichtiger Faktor, besonders in Hinblick auf die durch den zusätzlichen Platz gewonnenen Möglichkeiten, weitere technische Merkmale für die Abfüllanlage einzubauen.

Bei gleichem Messbereich und ähnlichen Leistungseigenschaften kann ein piezoelektrischer Aufnehmer um einen Faktor 30 kleiner als ein vergleichbarer Dehnungsmessstreifenaufnehmer ausgebildet sein.

In der Lebensmittelindustrie, insbesondere in der Getränkeindustrie, werden sehr hohe Abfüllraten, üblicherweise bis zu mehreren tausend Behältern in der Stunde, erreicht. Durch das Abfüllen von mehreren tausend Behältern in der Stunde stellt sich an jeder Wiegeeinrichtung ein schneller und damit dynamischer Wechsel der zu füllenden Behälter ein. Aufgrund der hohen Eigenfrequenz sind Piezoelemente besonders gut für solche dynamischen Anwendungen geeignet.

Außerdem kann der Messweg bei piezoelektrischen Sensoren minimiert werden, da der Piezokristall bereits die mechatronische Komponente mit elektrischem Ausgangssignal bildet. Die Messempfindlichkeit eines piezoelektrischen Sensors hängt üblicherweise nicht von seiner Größe oder dem Volumen des Piezokristalls ab, sondern lediglich von dem verwendeten Material und dessen Geometrie.

Piezoelektrische Sensoren können auch in großen Temperaturbereichen verwendet werden, welche beispielsweise beim Heißabfüllen von Getränken auftreten können.

Piezoelektrische Sensoren arbeiten typischerweise überlastungssicher und haben einen großen Messbereich, der auch ein exaktes Abfüllen von Behältern ermöglicht. Bei einem fehlerhaften Überfüllen eines Behälters kann aufgrund der Überlastungssicherheit und des großen Messbereichs eine Beschädigung der Wiegeeinrichtung verhindert werden. Ein Piezokristall arbeitet lange Zeit stabil und im Wesentlichen ermüdungsfrei. Dadurch können kostenintensive Wartungsarbeiten minimiert werden.

Zusammenfassend lassen sich die wichtigsten allgemeinen Eigenschaften von Piezokristallen wie folgt zusammenfassen:
hoher Isolationswiderstand,
hohe mechanische Festigkeit,
hohes Elastizitätsmodul,
keine Pyroelektrizität (je nach Kristallart),
keine Hysterese,
sehr hohe Linearität,
perfekte Stabilität.

Es versteht sich, dass in den zuvor beschriebenen Ausführungsbeispielen genannte Merkmale nicht auf diese speziellen Kombinationen beschränkt und auch in beliebigen anderen Kombinationen möglich sind.

## Patentansprüche

1. Füllvorrichtung zum Befüllen von Behältern (101; 201; 301; 501; 601; 701) in der Lebensmittelindustrie, umfassend wenigstens eine Wiegeeinrichtung zum Bestimmen einer Füllmenge, wobei die wenigstens eine Wiegeeinrichtung wenigstens ein Piezoelement (203; 303; 403; 503; 603; 703) umfasst.

2. Füllvorrichtung nach Anspruch 1, wobei die Vorrichtung derart ausgebildet ist, dass ein zu befüllender Behälter mechanisch mit dem wenigstens einen Piezoelement verbunden ist.

3. Füllvorrichtung nach Anspruch 1 oder 2, wobei das wenigstens eine Piezoelement derart angeordnet ist, dass es bei einem Füllvorgang komprimiert und/oder expandiert wird.

4. Füllvorrichtung nach einem der vorangegangenen Ansprüche, wobei die Vorrichtung derart ausgebildet ist, dass ein zu befüllender Behälter über wenigstens einen Hebel mit dem wenigstens einen Piezoelement verbunden ist.

5. Füllvorrichtung nach einem der vorangegangenen Ansprüche, wobei die Vorrichtung derart ausgebildet ist, dass zwischen einem zu befüllenden Behälter und dem wenigstens einen Piezoelement ein Abdeckelement (204; 504) angeordnet ist.

6. Füllvorrichtung nach einem der vorangegangenen Ansprüche, außerdem umfassend eine Halterung (102; 202; 302; 402; 702; 514; 614) zum Haltern eines zu befüllenden Behälters, wobei das wenigstens eine Piezoelement im Bereich der Halterung angeordnet ist.

7. Füllvorrichtung nach Anspruch 6, wobei die wenigstens eine Wiegeeinrichtung außerdem wenigstens ein Federelement (308; 608) umfasst.

8. Füllvorrichtung nach Anspruch 7, wobei das wenigstens eine Federelement derart angeordnet und/oder ausgebildet ist, dass ein zu befüllender Behälter das wenigstens eine Federelement derart verformt, dass der zu befüllende Behälter in mechanischen Kontakt mit dem wenigstens einen Piezoelement kommt.

9. Füllvorrichtung nach einem der vorangegangenen Ansprüche, außerdem umfassend eine Spannungsquelle, die derart ausgebildet und/oder angeordnet ist, dass eine vorherbestimmte Spannung an das wenigstens eine Piezoelement angelegt werden kann.

10. Verwendung wenigstens eines Piezoelements zum Bestimmen einer Füllmenge in einer Füllvorrichtung zum Befüllen von Behältern in der Lebensmittelindustrie.

11. Verfahren zum Befüllen von Behältern in der Lebensmittelindustrie, insbesondere mit Flüssigkeiten, mit wenigstens den Schritten
Bereitstellen einer Füllvorrichtung nach einem der Ansprüche 1 - 9,
Bestimmen einer elektrischen Ladung wenigstens eines Piezoelementes, und Bestimmen einer Füllmenge basierend auf der bestimmten elektrischen Ladung.
